# EUROPEAN PATENT SPECIFICATION

(11) **EP 2 768 865 B1**
(45) Date of publication and mention of the grant of the patent: **28.11.2018**
(21) Application number: 12775477.8
(22) Date of filing: 16.10.2012
(51) Int. Cl.: C08B 31/00, C08B 31/04, C08B 31/10, C08J 5/04, C08K 5/092, C08K 3/32, C08K 5/053

(54) **A BINDING RESIN FOR NONWOVEN FABRICS, IN PARTICULAR FOR MANUFACTURING SUPPORTS FOR BITUMINOUS MEMBRANES, A METHOD FOR PREPARING IT, AND A NONWOVEN FABRIC OBTAINED BY USING SAID RESIN.**
BINDEHARZ FÜR VLIESSTOFFE INS BESONDERE FÜR DIE HERSTELLUNG BITUMINÖSER MEMBRANEN, METHODEN ZU DEREN HERSTELLUNG UND MIT DEM BINDEHARZ HERGESTELLTE VLIESSTOFFE.
RÉSINE DE LIAISON POUR TISSUS NON TISSÉS EN PARTICULIER POUR LA PREPARATION DES MEMBRANES BITUMEUSES, PROCÉDÉS DE FABRICATION ET TISSUS NON TISSÉS CONTENANT CES RÉSINES.

(30) Priority: 19.10.2011 IT MI20111897
(43) Date of publication of application: 27.08.2014
(73) Proprietor: POLITEX s.a.s. di FREUDENBERG POLITEX s.r.l., 20121 Milan (IT)
(72) Inventor: MIGLIAVACCA, Massimo, I-20149 Milano (IT); LEVI, Marinella, I-20155 Milano (IT); TURRI, Stefano, I-20861 Brugherio (MB) (IT)
(74) Representative: Banse & Steglich Patentanwälte PartmbB
(86) International application number: PCT/EP2012/070456
(87) International publication number: WO 2013/057086

(56) References cited:
- EP-A1- 0 405 921
- EP-A1- 1 475 390
- WO-A1-00/39389
- WO-A1-2011/042610
- PL-B1- 200 024
- ABDUS SALAM ET AL: "Incorporation of carboxyl groups into xylan for improved absorbency", CELLULOSE, KLUWER ACADEMIC PUBLISHERS (DORDRECHT), NL, vol. 18, no. 4, 23 April 2011 (2011-04-23) , pages 1033-1041, XP019923273, ISSN: 1572-882X, DOI: 10.1007/S10570-011-9542-Y
- JOHN J K ET AL: "Properties of cassava starch-dicarboxylic acid complexes", CARBOHYDRATE POLYMERS, APPLIED SCIENCE PUBLISHERS, LTD. BARKING, GB, vol. 39, no. 2, 1 June 1999 (1999-06-01), pages 181-186, XP027165995, ISSN: 0144-8617 [retrieved on 1999-06-01]

## Description

The present invention relates to a binding resin for nonwoven fabrics, in particular for manufacturing supports for bituminous membranes, to the method for preparing it, and to the nonwoven fabric obtained by using said resin.

Supports for bituminous membranes used for roof waterproofing must meet several technical requirements.

The supports must primarily have suitable mechanical features such as to withstand the stresses they are subjected to, both in the bitumen impregnation step and in the life cycle once the finished membranes have been laid on the roofs. Moreover, it is essential for the supports to have an excellent dimensional stability to the mechanical and thermal stresses which characterize the above steps.

Synthetic resins have been widely used to this end, which ensure good product properties in terms of mechanical, thermal performance and dimensional stability. The resins must have such a rigidity to withstand the high temperatures the support is subjected to during the bitumen impregnation step, but they must also impart the flexibility required for treating the support at ambient temperature.

The resins used to this end have mainly been developed from both butadiene and styrene/butadiene copolymers and from acrylates or styrene/acrylate copolymers, containing methylol functional groups (-CH₂OH). In these cases, the polymer crosslinking occurs by forming bonds between the methylol groups, with consequent release of formaldehyde. The emissions of formaldehyde caused by the crosslinking process may have a negative impact on the environment. Moreover, formaldehyde is a toxic substance by inhalation, highly irritating and suspected of being carcinogenic, therefore the release of such a substance is undesired as it poses risks to the workers' health.

For the above reasons, increasingly strict government regulations have been issued over the last decades, which have led the manufacturers to formulate binding resins with low emissions or free from such a substance.

EP 0312008 A2 and EP 0387511 A2, both to Nat Starch Chem Invest, describe a formaldehyde-free resin for nonwoven fabrics used in the field of roofing and flooring. The resin is prepared from a polymer emulsion comprising alkyl acrylate or methacrylate ester monomers, hydroxy alkylates or methacrylates, a co-monomer containing methylol groups and a functional co-monomer.

EP 1942142 B1 to Rohm & Haas describes an aqueous solution for heat-resistant nonwoven fabrics. The aqueous solution composition comprises polycarboxylic (co)-polymers having at least two characteristic groups of carboxylic acids, anhydrides or salts thereof; polymer particles of (co)-polymer emulsions and at least one polyol.

EP 0354023 A2 to Sequa Chemicals Inc. describes a starch-based resin used for nonwoven fabrics manufactured from polyester fibers, used in the field of roofing. The resin is an aqueous solution with a total solids content from 10 to 50%. The resin formulation comprises starch (about 67% by weight on a dry basis), a crosslinking agent added in a range from 1 to 15% by weight of the starch, a hydrophobing agent present in an amount of more than 4% as compared to the weight of the starch and possibly, a polymer additive, present in an amount of 10-50% as compared to the starch weight. The resin may also be used on fabrics manufactured from glass fibers, in partial or total replacement of conventional urea-formaldehyde-based resins. The crosslinking agents generally used include formaldehyde-containing resins (urea-formaldehyde resins, melamine-formaldehyde resins, acetone-formaldehyde resins) or glyoxals, polyol, glycol or cyclic urea blocked glyoxal resins, or different metal salts, including ammonium zirconium carbonates. The polymer additive includes polyvinyl alcohol and acrylamide homo-polymers and copolymers. The hydrophobing agent consists of an emulsion comprising an emulsifying agent and a hydrophobic compound, such as waxes, melamine-formaldehyde resins alkylated with fatty acids, alkyl ketene dimers, alkenyl succinic anhydrides, silicone oils.

JP 11012946 and JP 11012947 to Toyobo describe the composition of a resin used for imparting rigidity to nonwoven fabrics made of polyester fibers, glass, cellulose, used as bituminous membrane supports (roofing). The resins consist of polyurethane and polyester-based aqueous solutions with the addition of a crosslinking agent and at least one of the following compounds: polyvinyl alcohol, starch and cold soluble cellulose, for a total solids content from 10 to 50%.

US 2005/0215153 A1 to Owens Corning describes the composition of a polycarboxylic resin containing a modified starch as a co-binder. The starch serving the co-binding function may be a dextrin, a modified dextrin, a maltodextrin or a combination thereof. The resin consists of a polycarboxylic polymer which may be a homopolymer or a copolymer prepared from unsaturated carboxylic acids with the addition of one or more vinyl polymers, a crosslinking agent and possibly a catalyst. Dextrin may be present in an amount ranging from 10 to 75% in the total resin formulation. The ratio of polycarboxylic resin to the co-binding dextrin varies from 90:10 to 25:75.

US 2009/0275699 A1 to Johns Manville describes the composition of a formaldehyde-free, starch-based resin which is used as a binder for products containing (organic and inorganic) fibers, mainly glass fibers but also polymer spunbond fabrics. The resin mainly consists of an aqueous solution of a polycarboxylic polymer, consisting of a co-polymer with multiple types of carboxylic acids and other monomers such as vinyl or aromatic compounds. The resin composition also includes a crosslinking agent which may be an amine or polyol, a cationic starch with a high molecular weight (MW>10000 g/mol) and possibly a catalyst which may promote the crosslinking. The starch may react with the other components in the resin, thus serving a function similar to that of the crosslinking agent, or it may not react and only serve as a filler. The amount of starch in the resin formulation ranges from 5 to 60% by weight.

US 2010/0021644 A1 to Johns Manville describes the composition of a formaldehyde-free resin with a pH higher than 4.5 used as a binder for products containing (organic and inorganic) fibers, mainly glass fibers. The resin consists of an aqueous solution comprising a polycarboxylic polymer (consisting of 10-100% by weight anhydride or butenedioic acid), a polyol, a catalyst with crosslinking function (preferably a phosphorus-containing compound). In addition, the solution may also contain an initiator and an inorganic or organic filler, such as starch.

EP 2192153 A2 to Johns Manville describes a binding resin and the use thereof for consolidating fabrics and products containing such reinforced fabrics, which are used in the field of roofing and flooring. The resin is characterized by the presence of 10-70% by weight on a dry basis of a polycarboxylic acid, preferably polyacrylate, which may be crosslinked with a crosslinking agent which may consist of a polyol, a polyvalent alcohol, a polyalkanolamine, or a mixture thereof. The resin composition also comprises 0-50% by weight polyvinyl acetate on a dry basis or, as an alternative, 1-70% of an additive such as starch, amphoteric hydroxide, kaolin (aluminum silicate), or a mixture thereof.

Food Chemistry 118 (2010) 702-711 reports a study related to the possibility of using citric acid when crosslinking starch films to improve the performance thereof in terms of mechanical tensile properties, thermal stability and reduction of the dissolution in water and formic acid.

The prior art in the field of use of starch as a co-binder mixed with synthetic resins provides several teachings. However, although to a smaller extent, the formation and emission of formaldehyde is not avoided.

The object of the present invention was to develop a non-woven support for bituminous membranes, which is impregnated with a totally formaldehyde-free binding resin, entirely consisting of materials of natural and sustainable origin which, when applied on nonwoven fabrics, has performance equal to or higher than the resins of synthetic origin, and is competitively cost-effective.

Such an object is achieved by a resin consisting of 100% natural, sustainable raw materials, which may be used in manufacturing polyester nonwoven fabrics used for roofing, as well as for other products used in the fields of building, flooring, heat and sound insulation.

### Resin composition

The resin of the present invention is a starch-based aqueous solution. In addition to starch, the formulation also includes a crosslinker of natural origin, a catalyst and possibly an additive and a hydrophobing agent.

### Starch

The types of starch used in the present invention may comprise native or modified starches. Native starch has a granular structure, is water-insoluble and in this form is only used in some specific applications; for normal applications, it is converted into another form that has a higher water solubility. Native starch may be modified by means of chemical, physical and enzymatic treatments. The treatment technologies are intended to modify the properties of the natural starch to make it more suitable for various applications. For example, the starch may be modified to make it cold soluble and/or to modify its viscosity and/or limit its retrogradation. Therefore, the starch molecules are subjected to a controlled degradation, through thermal or enzymatic treatments, or chemically modified by introducing specific functional groups.

The type of starch that may be used in the following invention comprises starches extracted from raw materials of plant origin, such as maize, wheat, potatoes, peas and legumes in general, tapioca, etc.

### Crosslinking agent

The composition of the resin according to the present invention includes the use of a crosslinking agent of natural origin, which is added in order to react with the starch, thus creating covalent bonds. The crosslinking is required to improve the mechanical properties of starch and decrease the water dissolution thereof.

These compounds typically contain one or more functional groups which react with the hydroxyl groups of the starch molecule, thus promoting the crosslinking thereof. Classes of these crosslinking compounds may include natural polycarboxylic acids such as succinic acid, an inexpensive, non toxic compound which may be manufactured from the fermentation of starch.

The amount of succinic acid to be added for crosslinking the starch may vary from 5 to 25%, preferably from 10 to 20% (by weight of starch).

### Catalyst

The composition of the resin of the present invention comprises a catalyst that accelerates the crosslinking reaction. In the present invention, an alkali metal salt of a phosphorous-containing acid, such as sodium hypophosphite, has proved to provide the best performance. The amount of catalyst is determined to be from 40 to 60% as compared to the crosslinker weight, preferably from 45 to 55%.

### Additive

The resin composition may also include additives for improving the end product performance. Such additives typically consist of polyols, such as glycerol. A concentration of such additives in the range between 5 and 25% as compared to the starch weight is recommended for improving some plastic properties in the end product, such as elongation to break and flexibility.

### Hydrophobing agent

Other compounds may be added to the formulation of the natural resin object of the present invention, in order to improve some performance of the end product. The use of large quantities of starch requires the use of a hydrophobing agent to neutralize the affinity of starch with water. A hydrophobing compound is added for limiting the capillarity absorption in the nonwoven fabric fibers, caused by the presence of hydroxyl groups contained in the starch molecule. The water absorption is unfavourable for the applications of nonwoven fabrics in waterproofing in general or for roofing.

A water repellent compound is generally used as a hydrophobing agent such as to inhibit the action of capillarity absorption in the nonwoven fabric fibers. The best results are obtained by using alkyl ketene dimer (AKD), a fatty acid derivative with two hydrocarbon groups (R1 and R2) containing 8-36 carbon atoms, which may be saturated or unsaturated or branched or linear. The hydrocarbon groups used normally include molecules with 14-18 carbon atoms. When these hydrocarbon groups react with carbohydrates, they impart hydrophobic properties.

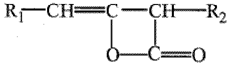

The hydrophobing compound may be applied to the nonwoven fabric by means of different techniques, including spray atomization on the end product, or added to the formulation and applied by impregnation.

Generally, the optimal amount of the hydrophobing compound to be added in the impregnation step must be from 0.5 to 4% as compared to the starch weight on a dry basis, preferably of more than 1%.

### Field of application of the invention

The present invention applies to nonwoven fabrics manufactured from different types of fibers. Such fibers may be of natural, mineral, artificial and synthetic origin. Natural fibers may comprise, for example, cotton, linen, sisal, jute, hemp, coconut. Fibers of synthetic nature may include fibers derived from polyamide, polypropylene, PET, PBT, PTT polymers. Fibers of inorganic origin may comprise glass fibers, ceramic fibers, basalt, carbon, metals, metal oxides. Fibers of artificial nature may be obtained by processing cellulose. The fibers may be cut as a staple or spun in the form of continuous yarns and arranged to form different varieties of nonwoven fabrics, used as supports for bituminous membrane. Nonwoven fabrics may be reinforced during manufacturing by inserting glass, synthetic, metal wires or reinforcing grids. In addition to the reinforcing purpose, the field of application of nonwoven fabrics may also relate to other products used in the field of building, flooring, heat and sound insulation.

### Advantages when using the resin according to the invention

One of the main advantages of using a 100% natural resin as an alternative to synthetic resins is linked to the ecological and safety aspect. The total suppression of any formaldehyde-containing or -developing compound indeed allows a considerable reduction of polluting emissions and a total safety for workers who manufacture or use such products. In addition, an advantage is obtained in terms of reduction of CO₂ emissions, which may be proved through a Life Cycle Assessment process.

Using natural, sustainable raw materials also allows a considerable benefit in economic terms, leading to a significant reduction of costs in manufacturing nonwoven fabrics. Synthetic resins typically are very expensive and their price is strongly affected by the oil price and subject to high volatility. Starch - the main compound in the formulation of the resin object of the present invention - is a widely available, low cost compound resulting from raw materials of natural origin, the price of which has a relative stability. Moreover, the crosslinking agent used in the present invention may be a starch derivative, from which it is produced by fermentation, therefore its price has the same stability.

A further advantage of the present invention relates to the performance of the nonwoven fabric on which it is applied. Indeed, the product impregnated with the 100% natural, sustainable resin object of the present invention, has mechanical properties which are equal to or higher than those obtained by using normal synthetic resins.

### Method for preparing the resin

When preparing the natural resin object of the present invention, the various components are added to the dilution water according to the following method:
a. Dosing the dilution water in the total amount determined by the desired solids content. Depending on the applications, the total solids content varies from 10 to 30%. Accordingly, the dilution water represents 70-90% by weight of the formulation.
b. Dosing the starch in the amount from 8% to 30% as a percentage by weight in the resin formulation.
c. Dosing succinic acid in an amount of 5-25% by weight of the starch.
d. Dosing the catalyst in the range between 40 and 60% as compared to the crosslinker weight.
e. Dosing the additive in the range between 5 and 25% as compared to the starch weight.

The preparation method is described in more detail hereinafter, with reference to experimental tests carried out on specific, non-limiting examples.

### Experimental tests

### Test 1: Pilot scale testing of a resin consisting of 100% starch crosslinked with succinic acid.

The preparation of 500 ml of a mixture with a solids content of 14% and the subsequent assessments of the mechanical and thermal features of a polyester nonwoven fabric impregnated with the same mixture are described. The performance is assessed with the following lab tests, by comparison with the same nonwoven fabric impregnated with the standard synthetic resin consisting of 70% styrene/acrylates - 30% melamine:
1. Tensile tests at room temperature according to EN ISO 9073-3-1989;
2. Tensile tests at high temperature: non-coded method (tensile tests in thermostatic chamber at 180 °C, 80 mm distance between the clamps, 100 mm/min deformation speed).

The starch solution was prepared by dispersing 57.4 g starch, succinic acid and catalyst in water at ambient temperature. The solution was heated to 90 °C and left in isothermal atmosphere for 60 minutes, keeping the system under mechanical stirring. Finally, the system was cooled to 65 °C and the required amount of additive was added.

| **INGREDIENTS** | **% [w/w]** | **[g]** |
|---|---|---|
| Starch | 11.5%. | 57.4 |
| Succinic acid | 1.6% | 8.0 |
| Glycerol | 1.6% | 8.0 |
| Sodium hypophosphite | 0.8% | 4.0 |
| Water | 84.5% | 422.6 |

Samples (33 cm x 44 cm) of PET nonwoven fabric reinforced with glass wires 60 TEX were impregnated in a bath containing the 100% starch-based prepared solution with a solids content of 14%. The samples were impregnated to reach a final add-on of 21% on a dry basis following oven drying. The resin applied on the nonwoven fabric samples was oven dried and crosslinked at 200 °C for 3 minutes and 45 seconds. 10 specimens were obtained from the samples produced, which were subjected to mechanical tensile tests with Instron dynamometer:
▪ 5 50x300mm specimens for cold tests (room temperature)
▪ 5 50x180mm specimens for hot tests (180 °C)

The tensile test results are shown in Fig. 1 and Fig. 2, which show the curve (Pr7) obtained from the average of 5 specimens. The tables below (Tab. 1 and Tab. 2) summarize the main mechanical properties measured in the lab tests.

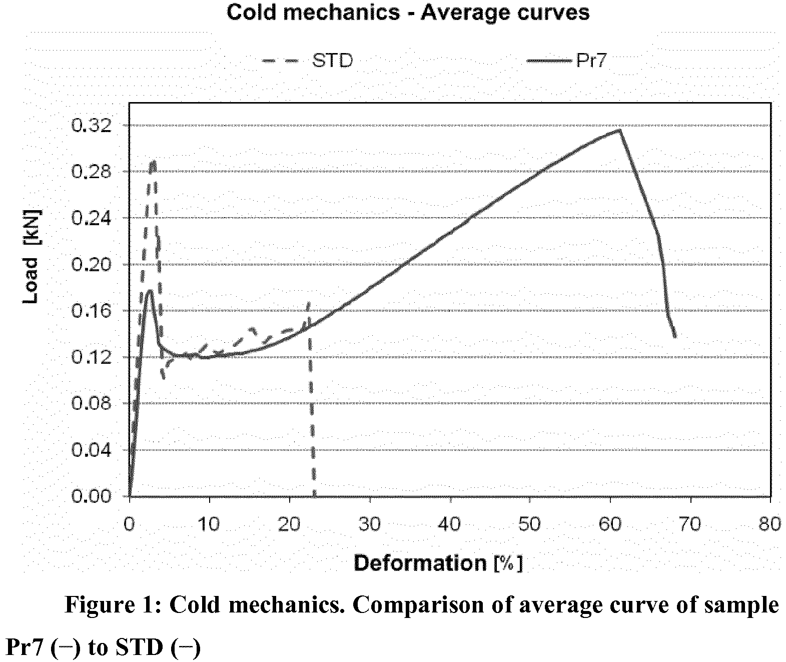

**Table 1: Cold mechanical properties. Comparison of sample Pr7 to STD**

| | **STD** | **Pr7** |
|---|---|---|
| **Weight [g/m²]** | 148 | 174 |
| **Breaking load NW (N/50 mm)** | 151 | 326 |
| **Tensile deformation NW [%]** | 23.0% | 65.0% |
| **Load at 2% [N/50mm]** | 229 | 168 |
| **Tenacity - *L* [N/50mm/g*m²]** | 0.102 | 0.187 |
| **Young module [MPa]** | 111 | 100 |

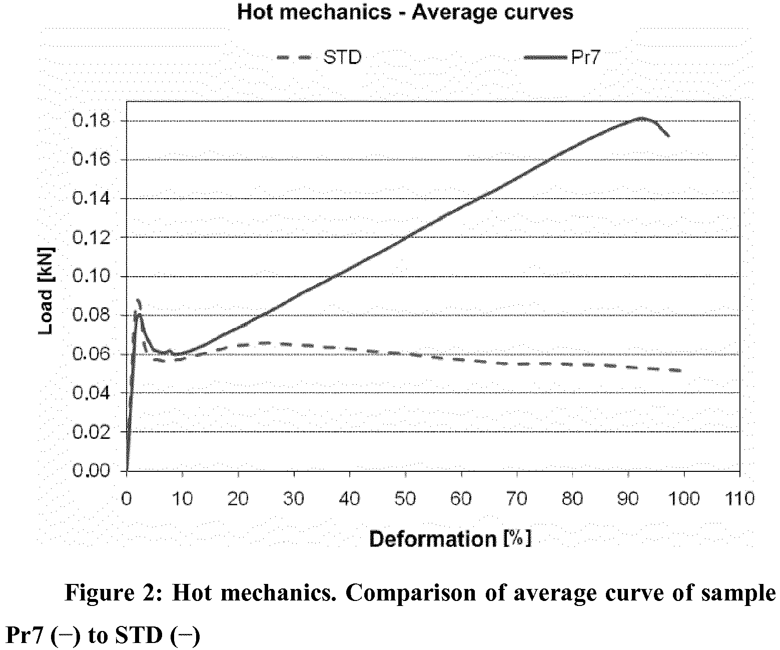

**Table 2: Hot mechanical properties. Comparison of sample Pr7 to STD**

| | **STD** | **Pr7** |
|---|---|---|
| **Weight [g/m²]** | 148 | 169 |
| **Wire breaking load (N/50 mm)** | 91 | 86 |
| **Wire tensile deformation [%]** | 2.0% | 2.18% |
| **Deformation @ 50 N [%]** | 1.10% | 1.27% |
| **Deformation @ 80 N [%]** | 1.57% | 1.96% |
| **Deformation @ 100 N [%]** | \ | \ |
| **Young module [MPa]** | 52 | 100 |

### Test 2: Pilot scale testing of resin consisting of 100% starch crosslinked with succinic acid.

The preparation of 500 ml of a mixture with a solids content of 14% and the subsequent assessments of the mechanical and thermal features of a polyester nonwoven fabric impregnated with the same mixture through lab tests are described.

The process of Example #1 was repeated with the exception of the thermal treatment of the solution. The starch solution was prepared by dispersing 57.4 g starch in water at ambient temperature. The relative required amount of succinic acid, catalyst and additive was dissolved in the starch solution. Finally, the amount of water required to achieve the desired concentration was added.

The mechanical test results are shown in the following figures (Fig. 3 and Fig. 4), which show the curve (Pr4) obtained from the average of 5 specimens. The tables below (Tab. 3 and Tab. 4) summarize the main mechanical properties measured in the lab tests.

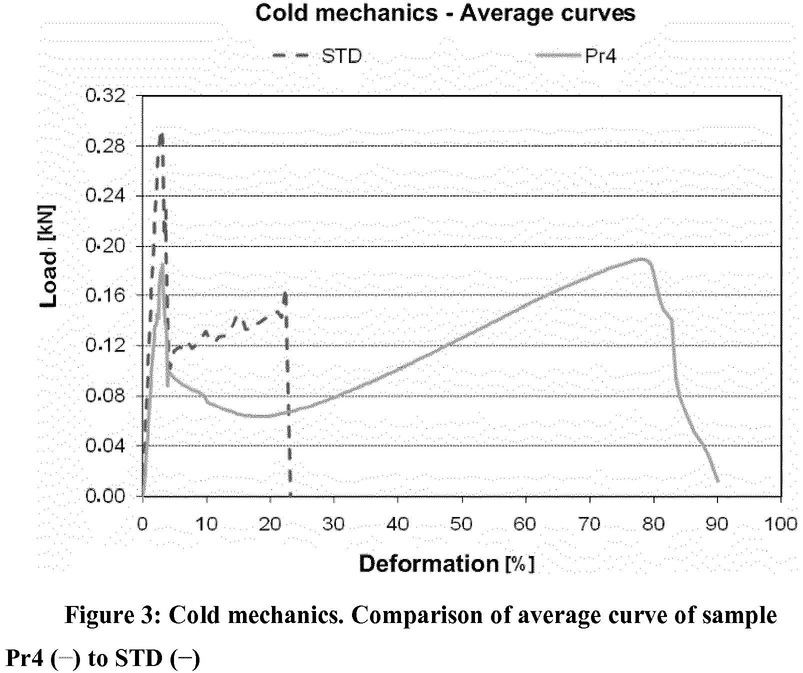

**Table 3: Cold mechanical properties. Comparison of 100% starch + citric to STD**

| | **STD** | **Pr4** |
|---|---|---|
| **Weight [g/m²]** | 148 | 142 |
| **Breaking load NW (N/50 mm)** | 151 | 195 |
| **Tensile deformation NW [%]** | 23.0% | 80.9% |
| **Load at 2% [N/50mm]** | 229 | 136 |
| **Tenacity - *L* [N/50mm/g*m²]** | 0.102 | 0.137 |
| **Young module [MPa]** | 111 | 47 |

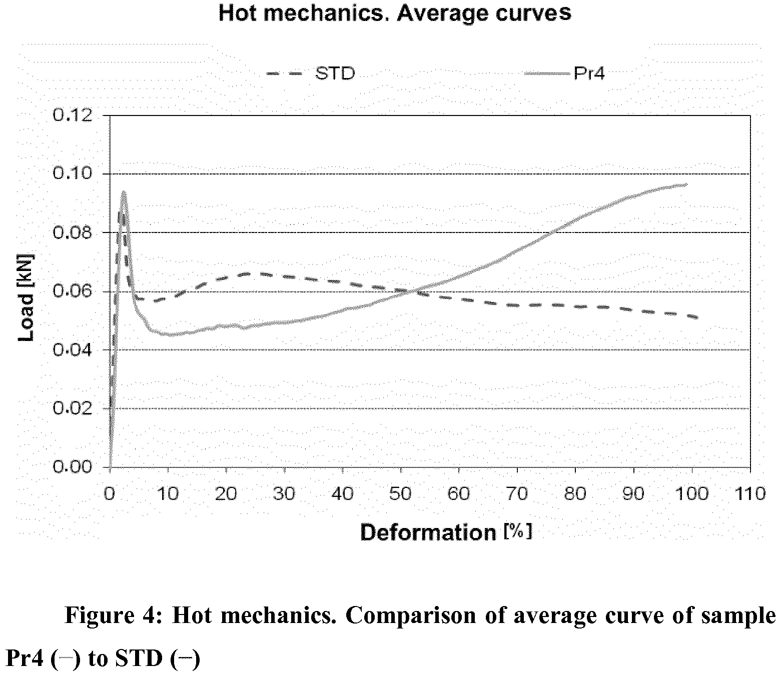

**Table 4: Hot mechanical properties. Comparison of sample Pr4 to STD**

| | **STD** | **Pr4** |
|---|---|---|
| **Weight [g/m²]** | 148 | 134 |
| **Wire breaking load (N/50 mm)** | 91 | 96 |
| **Wire tensile deformation [%]** | 2.0% | 2.63% |
| **Deformation @ 50 N [%]** | 1.10% | 1.23% |
| **Deformation @ 80 N [%]** | 1.57% | 1.90% |
| **Deformation @ 100 N [%]** | \ | 2.64% |
| **Young module [MPa]** | 52 | 46 |

### Test 3: Pilot scale test of resin consisting of 100% starch crosslinked with succinic acid.

The preparation of 500 ml of a mixture with a solids content equal to 14% and the subsequent assessments of the mechanical and thermal features of a polyester nonwoven fabric impregnated with the same mixture through lab tests are described.

The process of Example #2 was repeated with the exception of the succinic acid content increased from 8.0 g to 10.6 g (20% as compared to the starch weight on a dry basis). Accordingly, the catalyst amount was increased to 5.3 g.

The mechanical test results are shown in the following figures (Fig. 5 and Fig. 6), which show the curve (Pr6) obtained from the average of 5 specimens. The tables below (Tab. 5 and Tab. 6) summarize the main mechanical properties measured in the laboratory tests.

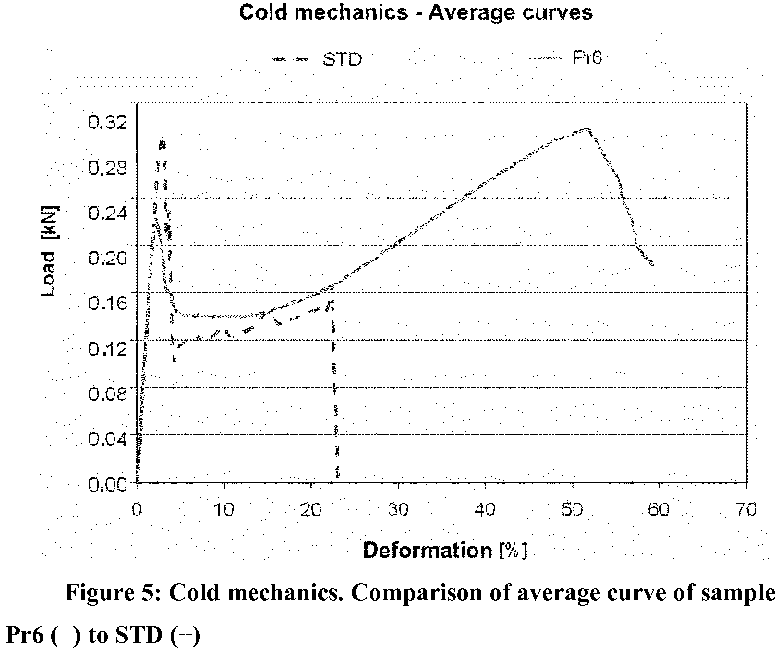

**Table 5: Cold mechanical properties. Comparison of sample Pr6 to STD**

| | **STD** | **Pr6** |
|---|---|---|
| **Weight [g/m²]** | 148 | 174 |
| **Breaking load NW (N/50 mm)** | 151 | 310 |
| **Tensile deformation NW [%]** | 23.0% | 54.3% |
| **Load at 2% [N/50mm]** | 229 | 217 |
| **Tenacity - *L* [N/50mm/g*m²]** | 0.102 | 0.177 |
| **Young module [MPa]** | 111 | 122 |

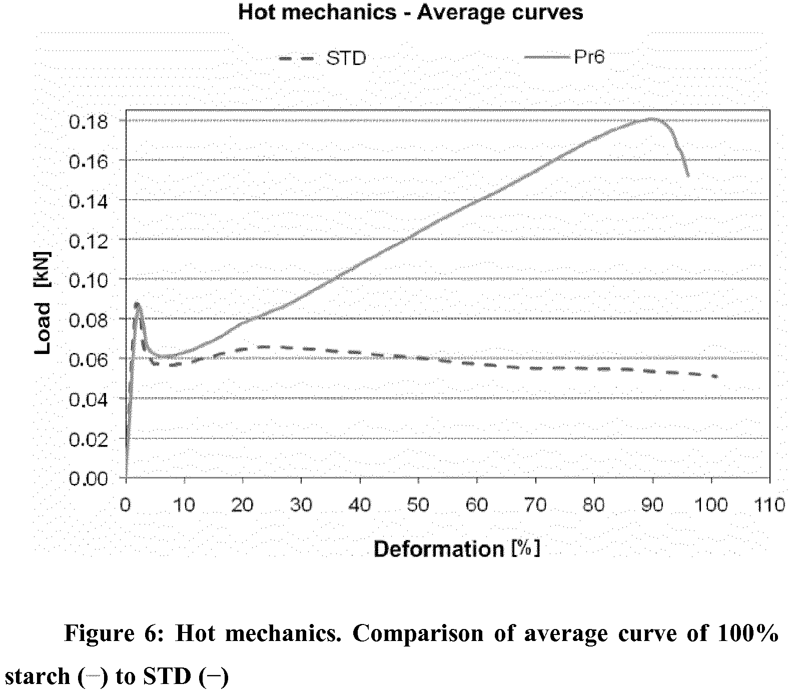

**Table 6: Hot mechanical properties. Comparison of sample Pr6 to STD**

| | **STD** | **Pr6** |
|---|---|---|
| **Weight [g/m²]** | 148 | 172 |
| **Wire breaking load (N/50 mm)** | 91 | 90 |
| **Wire tensile deformation [%]** | 2.0% | 2.21% |
| **Deformation @ 50 N [%]** | 1.10% | 1.37% |
| **Deformation @ 80 N [%]** | 1.57% | 2.03% |
| **Deformation @ 100 N [%]** | \ | 2.01% |
| **Young module [MPa]** | 52 | 97 |

### Test 4: Pilot scale testing of resin consisting of 100% starch crosslinked with citric acid.

The preparation of 500 ml of a mixture with a solids content of 14% and the subsequent assessments of the mechanical and thermal features of a polyester nonwoven fabric impregnated with the same mixture through lab tests are described.

The process of Example #2 was repeated with the exception of 8.2 g succinic acid replaced with 8.2 citric acid.

The mechanical test results are shown in the following figures (Fig. 7 and Fig. 8), which show the curve (Pr3) obtained from the average of 5 specimens. The tables below (Tab. 7 and Tab. 8) summarize the main mechanical properties measured in the laboratory tests.

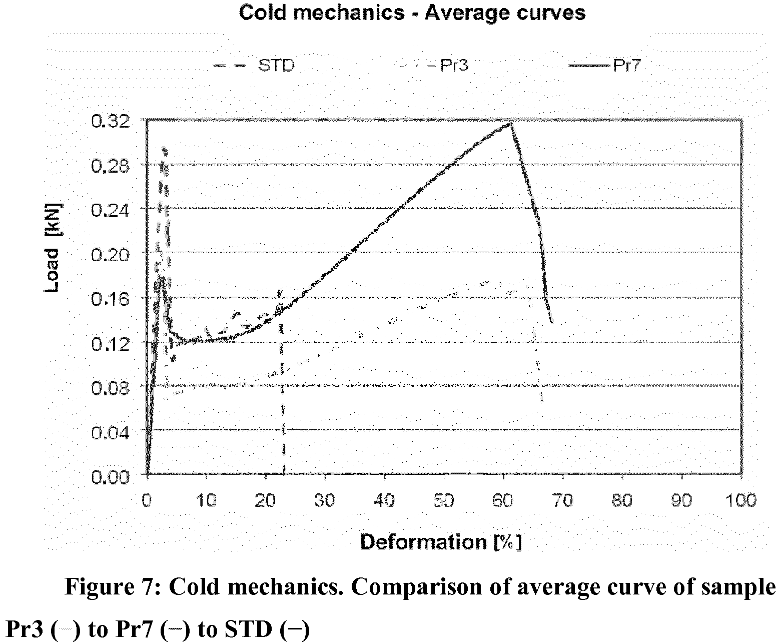

**Table 7: Cold mechanical properties. Comparison of sample Pr3 to STD**

| | **STD** | **Pr3** |
|---|---|---|
| **Weight [g/m²]** | 148 | 118 |
| **Breaking load NW (N/50 mm)** | 151 | 170 |
| **Tensile deformation NW [%]** | 23.0% | 61.5% |
| **Load at 2% [N/50mm]** | 229 | 175 |
| **Tenacity - *L* [N/50mm/g*m²]** | 0.102 | 0.145 |
| **Young module [MPa]** | 111 | 71 |

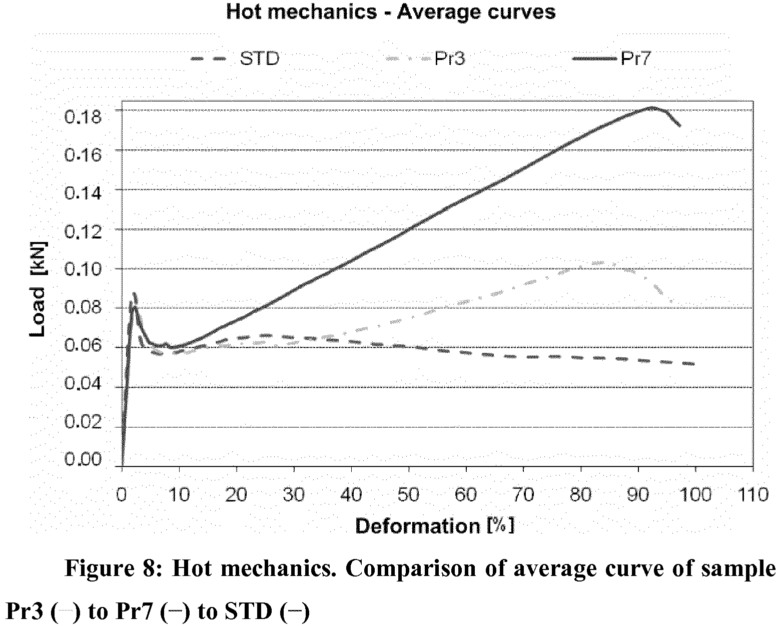

**Table 8: Hot mechanical properties. Comparison of sample Pr3 to STD**

| | **STD** | **Pr3** |
|---|---|---|
| **Weight [g/m²]** | 148 | 133 |
| **Wire breaking load (N/50 mm)** | 91 | 86 |
| **Wire tensile deformation [%]** | 2.0% | 2.29% |
| **Deformation @ 50 N [%]** | 1.10% | 1.14% |
| **Deformation @ 80 N [%]** | 1.57% | 1.94% |
| **Deformation @ 100 N [%]** | \ | 2.92% |
| **Young module [MPa]** | 52 | 47 |

Tensile tests at ambient temperature (Figs. 1, 3, 5, 7) show better performance for the product impregnated with 100% natural resin for both the load and the elongation at break, and for the tenacity. Using a percentage of succinic acid of 20% as compared to the starch weight (Example #3), the mechanical properties at ambient temperature are particularly improved and the Young Modulus also has a 10% increase.

From the tensile tests at 180 °C (Figs. 2, 4, 6, 8), no substantial differences between the two products are noted in the low deformation range (0-5%). At deformations higher than 5%, the load for the product impregnated with the 100% natural resin shows an increasing trend with the elongation, whereas for the standard product it remains almost constant.

### Test 5

Samples (20 cm x 300 cm) of the same nonwoven fabric as that of test #4, with initial weight from 70 to 80 g, were subjected to capillarity tests upon the addition of an AKD solution with a solids content of 15%. The AKD solution was added to the nonwoven fabric by spray atomization so as to reach a final add-on of 20% on a dry basis following the oven drying of the samples at 120 °C for 30 minutes.

The samples were immersed in water containing a drop of dye (methylene blue) to an initial level of 20 mm and analyzed after 2 and 24 hours by comparison with similar nonwoven fabric samples not treated with AKD.

The test showed that the addition of the hydrophobing agent has decreased the capillarity absorption by 75%.

## Claims

1. A nonwoven support manufactured from fibers of natural, mineral, artificial or synthetic origin to form bituminous membranes, particularly for covering roofs,
**characterized in that** the nonwoven support is impregnated with a binding resin which is an aqueous starch-based solution, which consists of starch, a crosslinker of natural origin, a catalyst and water, and possibly additives and a hydrophobing agent,
wherein the starch is of native type or modified, wherein in the modified starch, the starch molecules were subjected to a controlled degradation through thermal or enzymatic treatment,
wherein the crosslinking agent is a carboxylic acid having two or more carboxylic groups.

2. A nonwoven support according to claim 1, comprising synthetic, metal or glass reinforcing wires or lattice structures.

3. A nonwoven support according to claim 1 or 2, consisting of fibers of natural origin, such as cotton, linen, sisal, jute, hemp, coconut or mixtures thereof.

4. A nonwoven support according to claim 1 or 2 consisting of fibers of inorganic origin, such as glass fibers, ceramic fibers, basalt, carbon, metals, metal oxides.

5. A nonwoven support according to claim 1 or 2, consisting of fibers of artificial origin, such as fibers deriving from cellulose processing.

6. A nonwoven support according to claim 1 or 2, consisting of fibers of synthetic origin, such as fibers derived from polyamide, polypropylene, PET, PBT, PTT polymers or mixtures thereof.

7. A nonwoven support according to claim 1 or 2, manufactured from staple fibers or spunbonded fibers.

8. A nonwoven support according to claim 1, used in the field of general constructions, flooring, thermal insulation and soundproofing.

9. A nonwoven support according to claim 1, wherein the starch is of native type.

10. A nonwoven support according to claim 1, wherein the starch is modified by means of physical and enzymatic treatments.

11. A nonwoven support according to claim 9 or 10, wherein the starch is extracted from raw materials of plant origin, such as maize, wheat, potatoes, peas and legumes in general, tapioca.

12. A nonwoven support according to claim 1, wherein the crosslinking agent consists of succinic acid proportional to the weight of starch in the range from 5 to 25%, preferably from 10 to 20% (by weight).

13. A nonwoven support according to claim 1, wherein the catalyst consists of sodium hypophosphite, added in an amount proportional to the weight of crosslinker in the range from 40 to 60%, preferably from 45 to 55% (by weight).

14. A nonwoven support according to claim 1, further comprising an additive, wherein the additive consists of glycerol added in an amount proportional to the weight of starch in the range from 5 to 25%.

15. A nonwoven support according to claim 1, further comprising a hydrophobing agent consisting of alkyl ketene dimers and applied to the nonwoven fabric by spray atomization or added during the impregnating step in an amount proportional to the weight of starch in the range from 0.5 to 4%.

## Patentansprüche

1. Vliesstoffträgermaterial, hergestellt aus Fasern natürlichen, mineralischen, künstlichen oder synthetischen Ursprungs, um bituminöse Membranen auszubilden, insbesondere zur Abdeckung von Dächern,
**dadurch gekennzeichnet, dass**
das Vliesstoffträgermaterial mit einem Bindeharz imprägniert ist, das eine wässrige Lösung auf Stärkebasis ist, die aus Stärke, einem Vernetzungsmittel natürlichen Ursprungs, einem Katalysator und Wasser, sowie gegebenenfalls Zusatzstoffen und einem hydrophobierenden Mittel, besteht,
wobei die Stärke nativ oder modifiziert ist, wobei in der modifizierten Stärke die Stärkemoleküle einem kontrollierten Abbau durch thermische oder enzymatische Behandlung unterzogen wurden,
wobei das Vernetzungsmittel eine Carbonsäure mit zwei oder mehr Carboxygruppen ist.

2. Vliesstoffträgermaterial nach Anspruch 1, das synthetische, metallische oder gläserne Verstärkungsdrähte oder Gitterstrukturen umfasst.

3. Vliesstoffträgermaterial nach Anspruch 1 oder 2, das aus Fasern natürlichen Ursprungs wie etwa Baumwolle, Leinen, Sisal, Jute, Hanf, Kokosnuss oder Mischungen davon besteht.

4. Vliesstoffträgermaterial nach Anspruch 1 oder 2, das aus Fasern anorganischen Ursprungs wie etwa Glasfasern, Keramikfasern, Basalt, Kohlenstoff, Metallen, Metalloxiden besteht.

5. Vliesstoffträgermaterial nach Anspruch 1 oder 2, das aus Fasern künstlichen Ursprungs wie etwa Fasern, die sich aus Verarbeitung von Cellulose ergeben, besteht.

6. Vliesstoffträgermaterial nach Anspruch 1 oder 2, das aus Fasern synthetischen Ursprungs besteht, wie etwa aus Polyamid, Polypropylen, PET, PBT, PPT Polymeren oder Mischungen davon erhaltene Fasern.

7. Vliesstoffträgermaterial nach Anspruch 1 oder 2, hergestellt aus Stapelfasern oder Spinnvliesfasern.

8. Vliesstoffträgermaterial nach Anspruch 1, das auf dem Gebiet allgemeiner Bauten, für Fußböden, thermische Isolierung und Geräuschdämmung verwendet wird.

9. Vliesstoffträgermaterial nach Anspruch 1, wobei die Stärke nativ ist.

10. Vliesstoffträgermaterial nach Anspruch 1, wobei die Stärke mittels physikalischer und enzymatischer Behandlungen modifiziert ist.

11. Vliesstoffträgermaterial nach Anspruch 9 oder 10, wobei die Stärke aus Rohstoffen pflanzlichen Ursprungs wie etwa Mais, Weizen, Kartoffeln, Erbsen und Hülsenfrüchten im Allgemeinen, Tapioka extrahiert ist.

12. Vliesstoffträgermaterial nach Anspruch 1, wobei das Vernetzungsmittel im Verhältnis zum Gewicht der Stärke im Bereich von 5 bis 25%, bevorzugt von 10 bis 20% (Gewichtsanteile), aus Succinsäure besteht.

13. Vliesstoffträgermaterial nach Anspruch 1, wobei der Katalysator aus Natriumhypophosphit besteht, das im Verhältnis zum Gewicht des Vernetzungsmittels in einer Menge im Bereich von 40 bis 60%, bevorzugt von 45 bis 55% (Gewichtsanteile) zugegeben ist.

14. Vliesstoffträgermaterial nach Anspruch 1, das ferner einen Zusatzstoff umfasst, wobei der Zusatzstoff aus Glycerin besteht, das im Verhältnis zum Gewicht der Stärke in einer Menge im Bereich von 5 bis 25% zugegeben ist.

15. Vliesstoffträgermaterial nach Anspruch 1, das ferner ein hydrophobierendes Mittel umfasst, das aus Alkylketendimeren besteht und im Verhältnis zum Gewicht der Stärke in einer Menge im Bereich von 0,5 bis 4% durch Sprühzerstäubung auf den Vliesstoff aufgebracht oder während des Imprägnierschritts zugegeben wurde.

## Revendications

1. Support non tissé fabriqué à partir de fibres d'origine naturelle, minérale, artificielle ou synthétique pour former des membranes bitumineuses, en particulier pour couvrir des toitures,
**caractérisé en ce que** le support non tissé est imprégné d'une résine de liaison qui est une solution aqueuse à base d'amidon, qui se compose d'amidon, d'un agent de réticulation d'origine naturelle, d'un catalyseur et d'eau, et éventuellement d'additifs et d'un agent d'hydrophobisation,
dans lequel l'amidon est de type natif ou modifié, dans lequel dans l'amidon modifié, les molécules d'amidon ont été soumises à une dégradation contrôlée par traitement thermique ou enzymatique, dans lequel l'agent de réticulation est un acide carboxylique comportant deux groupes carboxyliques ou plus.

2. Support non tissé selon la revendication 1, comprenant des fils de renforcement ou des structures en treillis synthétiques, métalliques ou en verre.

3. Support non tissé selon la revendication 1 ou 2, constitué de fibres d'origine naturelle, telles que le coton, le lin, le sisal, la jute, le chanvre, la noix de coco ou des mélanges de celles-ci.

4. Support non tissé selon la revendication 1 ou 2, constitué de fibres d'origine inorganique, telles que des fibres de verre, des fibres de céramique, de basalte, de carbone, de métaux, ou d'oxydes métalliques.

5. Support non tissé selon la revendication 1 ou 2, constitué de fibres d'origine artificielle, telles que des fibres obtenues par traitement de la cellulose.

6. Support non tissé selon la revendication 1 ou 2, constitué de fibres d'origine synthétique, telles que des fibres dérivées de polyamide, de polypropylène, de polymères PET, PBT, PTT, ou de mélanges de ceux-ci.

7. Support non tissé selon la revendication 1 ou 2, fabriqué à partir de fibres discontinues ou de fibres filées-liées.

8. Support non tissé selon la revendication 1, utilisé dans le domaine des constructions en général, des sols, de l'isolation thermique et de l'insonorisation.

9. Support non tissé selon la revendication 1, dans lequel l'amidon est de type natif.

10. Support non tissé selon la revendication 1, dans lequel l'amidon est modifié au moyen de traitements physiques et enzymatiques.

11. Support non tissé selon la revendication 9 ou 10, dans lequel l'amidon est extrait de matières premières d'origine végétale, telles que le maïs, le blé, les pommes de terre, les pois et les légumineuses en général, et le tapioca.

12. Support non tissé selon la revendication 1, dans lequel l'agent de réticulation se compose d'acide succinique présent dans une quantité de 5 à 25 %, préférablement de 10 à 20 % (en poids) relativement au poids de l'amidon.

13. Support non tissé selon la revendication 1, dans lequel le catalyseur se compose d'hypophosphite de sodium, ajouté dans une quantité de 40 à 60 %, préférablement de 45 à 55 % (en poids) relativement au poids de l'agent de réticulation.

14. Support non tissé selon la revendication 1, comprenant en outre un additif, l'additif se composant de glycérol ajouté dans une quantité de 5 à 25 % relativement au poids de l'amidon.

15. Support non tissé selon la revendication 1, comprenant en outre un agent d'hydrophobisation constitué de dimères d'alkylcétène et appliqué sur le tissu non tissé par pulvérisation par atomisation ou ajouté durant l'étape d'imprégnation dans une quantité de 0,5 à 4 % relativement au poids de l'amidon.
